# EUROPÄISCHE PATENTSCHRIFT

(11) **EP 3 039 734 B1**
(45) Veröffentlichungstag und Bekanntmachung des Hinweises auf die Patenterteilung: **29.05.2019**
(21) Anmeldenummer: 14761949.8
(22) Anmeldetag: 23.08.2014
(51) Int. Cl.: H01M 8/0284, H01M 8/0276, H01M 8/086, H01M 4/86, H01M 8/0273, H01M 8/2483, H01M 8/2484, H01M 8/242, H01M 8/1004, H01M 8/1018

(54) **VERFAHREN ZUR HERSTELLUNG EINER MEMBRAN-ELEKTRODEN-EINHEIT MIT UMLAUFENDER DICHTUNG SOWIE MEMBRAN-ELEKTRODEN-EINHEIT**
METHOD FOR PRODUCING A MEMBRANE ELECTRODE UNIT HAVING A PERIPHERAL SEAL, AND MEMBRANE ELECTRODE UNIT
PROCÉDÉ DE FABRICATION D'UNE UNITÉ MEMBRANE-ÉLECTRODE POURVUE D'UN JOINT D'ÉTANCHÉITÉ PÉRIPHÉRIQUE ET UNITÉ MEMBRANE-ÉLECTRODE

(30) Priorität: 27.08.2013 DE 102013014083
(43) Veröffentlichungstag der Anmeldung: 06.07.2016
(60) Teilanmeldung: 19153415.5
(73) Patentinhaber: Carl Freudenberg KG, 69469 Weinheim (DE)
(72) Erfinder: BAUER, Felix, 80689 München (DE); WOLZ, Christian, 85540 Haar (DE)
(74) Vertreter: Ritter von Poschinger-Camphausen, Hubertus
(86) Internationale Anmeldenummer: PCT/EP2014/002312
(87) Internationale Veröffentlichungsnummer: WO 2015/028134

(56) Entgegenhaltungen:
- EP-A1- 1 526 593
- EP-A2- 1 276 164
- WO-A1-00/10216
- WO-A1-99/04446
- WO-A2-2004/047210
- US-A1- 2009 162 732

## Beschreibung

Die vorliegende Erfindung betrifft ein Verfahren zur Herstellung einer mit einer umlaufenden Dichtung und einem umlaufenden Dichtrahmen versehenen Membran-Elektroden-Einheit (engl.: membrane electrode assembly - MEA) für eine elektrochemische Zelle, insbesondere für eine Brennstoffzelle. Ferner betrifft die vorliegende Offenbarung eine entsprechend mit einer umlaufenden Dichtung und einem umlaufenden Dichtrahmen hergestellte MEA sowie einen mit einer Mehrzahl solcher MEAs ausgestatteten Brennstoffzellenstapel (nicht Teil der vorliegenden Erfindung). Verfahren zur Herstellung einer MEA mit umlaufender Dichtung bzw. entsprechende MEAs bzw. solche MEAs beinhaltende Brennstoffzellenstapel sind aus dem Stand der Technik hinlänglich bekannt, wobei die die MEA randseitig umlaufende Dichtung einerseits eine Leckage zwischen den auf verschiedenen Seiten der Membran angeordneten Elektroden (Anode und Kathode) um die Membran herum wirksam unterbinden und andererseits unter den zumeist widrigen Betriebsbedingungen in einer elektrochemischen Zelle (Brennstoffzelle) möglichst langlebig sein soll. Die vorliegende Erfindung soll sich dabei insbesondere zur Verwendung mit so genannten "Flush-cut"-MEAs eignen, bei denen die die Membran sandwichartig umgebenden (Gasdiffusions-) Elektroden randseitig bündig mit der Membran abschließen. "Flush-cut"-MEAs können somit - unter Ermöglichung einer Rollen- bzw. "Sheet"-Herstellung - kostengünstig aus einem großflächig vorbereiteten und ggfs. bereits heißverpressten MEA-Verbund herausgetrennt bzw. herausgeschnitten werden.

Für ein wirksames Dichtkonzept zur umlaufenden Abdichtung der in einem Brennstoffzellenstapel in der Regel zwischen Bipolarplatten angeordneten MEAs sind dabei eine Vielzahl von Aspekten von Relevanz.

Insbesondere soll vorliegend ein Herstellungsverfahren bereitgestellt werden, mit dem in besonders einfacher und zuverlässig reproduzierbarer Weise eine Herstellung eines Verbunds aus MEA mit umlaufender Dichtung ermöglicht werden, welche sich - je nach verwendeten Materialien - entweder für den Einsatz in Niedertemperatur(NT)-Brennstoffzellen mit Betriebstemperaturen von kleiner 100°C oder in Hochtemperatur(HT)-Brennstoffzellen mit Betriebstemperaturen von (deutlich) größer als 100°C eignen. Im Falle eines Einsatzes erfindungsgemäßer MEAs mit umlaufender Dichtung in HT-Brennstoffzellen ist von besonderer Bedeutung, dass die MEAs und die Bipolarplatten eines Brennstoffzellenstapels einen (in der Regel sehr geringen) Wärmeausdehnungskoeffizienten aufweisen, der sich von dem (i.d.R. höheren) Wärmeausdehnungskoeffizienten eines zur Abdichtung der MEA verwendeten Dichtungsmaterials deutlich unterscheidet. Insbesondere im Falle der Verwendung eines polymeren Dichtmaterials wird im Stand der Technik, insbesondere bei MEAs für Niedertemperaturbrennstoffzellen, häufig auf Elastomere zurückgegriffen, die infolge ihrer Elastizität die sich aufgrund verschiedener Wärmeausdehnungskoeffizienten auftretenden mechanischen Spannungen ausgleichen können. Ferner ist im Rahmen der notwendigen Abdichtung einer MEA von grundsätzlicher Bedeutung, dass die für eine Dichtung zur Anwendung kommenden Materialien den widrigen Bedingungen in einer elektrochemischen Zelle für eine angemessene Lebensdauer Stand halten müssen, was insbesondere bei HT-PEM-Brennstoffzellen und phosphorsauren Brennstoffzellen (PAFC) aufgrund der dort in der Regel gegebenen Anwesenheit starker Säuren in der Membran zu berücksichtigen ist.

So ist es z.B. aus dem Stand der Technik bekannt, dass die MEA zu Abdichtungszwecken mit einer die MEA randseitig umlaufenden und auch die (Gasdiffusions-) Elektroden in einem Randbereich überdeckenden Dichtung aus einem elastomeren Material versehen wird, wie dies z.B. in der EP 1 759 434 A1 gezeigt ist. Die dabei bevorzugt zum Einsatz kommenden Elastomere sind jedoch, soweit sich diese überhaupt zum Einsatz in Hochtemperaturbrennstoffzellen (z.B. HT-PEM mit phosphorsäuredotierter Membran) mit einem Betriebstemperaturbereich zwischen z.B. 100 und 250°C (oder darüber) eignen, entweder vergleichsweise teuer oder weisen eine nicht optimale (Phosphor-)Säurebeständigkeit und somit eine vergleichsweise kurze Lebensdauer auf.

Ferner ist es z.B. aus der WO 2004/015797 A1 bekannt, die MEA einer Brennstoffzelle in ihrem randseitigen Bereich durch Laminierung (bei unterhalb des Schmelzpunktes von Polyimid liegenden Temperaturen) mit einem den Randbereich der MEA beidseitig umschließenden Polyimid- bzw. Polyetherimid-Rahmen auszustatten. Ein solcher Polyimid-Rahmen stellt zwar eine Randverstärkung für die MEA dar, jedoch keine vollwertige Dichtung, da hier zwingend noch weitere Dichtungen zur Abdichtung der MEA gegen die Bipolar- bzw. Separatorplatten einer Brennstoffzelle notwendig sind, was deren Herstellung - neben dem hohen Preis für geeignete Polyimide - vergleichsweise teuer macht. Ferner zeigt sich bei solchen die MEA ober- und unterseitig teilweise überdeckenden Randverstärkungen aus Polyimid mit fortschreitender Betriebsdauer eine zunehmende Versprödung, was offenbar daraus resultiert, dass der Wärmeausdehnungskoeffizient von Polyimid größer als derjenige einer typischen MEA (bzw. der Membran) ist. Und schließlich ist festzustellen, dass sich dieses Dichtkonzept nur für MEAs eignet, bei denen die Membran seitlich über die beiden Gasdiffusionselektroden hervorragt, da nur durch direkte Einbettung des Randbereichs der Membran in den auf den Randbereich der MEA auflaminierten Polyimid-Rahmen eine Leckage zwischen Anoden- und Kathodenseite wirksam unterbunden werden kann. Mit anderen Worten: Das in der WO 2004/015797 A1 beschriebene Konzept eignet sich nicht zur Anwendung an Flush-cut-MEAs, bei denen die Membran und die Gasdiffusionselektroden seitlich bündig miteinander abschließen.

In der WO 99/04446 A1 sind weitere Dichtungsanordnungen für die MEA einer Brennstoffzelle gezeigt, bei denen eine die jeweilige MEA umlaufende integrale Dichtung auf den seitlichen Rand der MEA seitlich aufgespritzt wird, wobei als Dichtungsmaterial wiederum ein Elastomer zum Einsatz kommt. Das seitliche Aufspritzen des Dichtungsmaterials ist jedoch vergleichsweise umständlich. Ferner erweist sich auch dieses Dichtungskonzept wegen der bereits vorgenannten Nachteile bei Verwendung elastomerer Materialien insbesondere für Hochtemperaturbrennstoffzellen als nicht optimal.

Eine eher kompliziert gestaltete Dichtungsanordnung, welche aus der US 6,596,427 B1 bekannt ist, sieht ein doppeltes Dichtungskonzept für elektrochemische Zellen mit einer den Zellstapel auf wenigstens einer Seite kapselnden Außendichtung und hierzu separaten, die einzelnen MEAs umgebenden Zelldichtungen vor. Dabei wird die MEA mittels der Zelldichtung von der z.B. aus einem thermoplastischen Material bestehenden Außendichtung separiert, um einen direkten Kontakt zwischen Außendichtung und MEA zu vermeiden.

Weitere Dichtungsanordnungen sind aus der US 7,722,978 B2, der US 7,914,943 B2, der DE 10 2006 004 748 A1, der DE 197 03 214 C2 und der WO 2011/157377 A2 bekannt. Die dort jeweils verwendeten Dichtungsmaterialien bzw. - anordnungen sind entweder gezielt auf die Anwendung in Niedertemperaturbrennstoffzellen mit einer Betriebstemperatur < 100°C ausgelegt oder eignen sich nicht optimal für den Einsatz in HT-PEM (Hochtemperaturpolymerelektrolytmembran-) Brennstoffzellen mit Betriebstemperaturen von (deutlich) > 100°C. EP1526593 offenbart eine mit einer umlaufenden Dichtung ("plug" 80, Abbildung 4) und einem umlaufenden Dichtungsrahmen (40) versehene Membran-Elektroden-Einheit (10) für eine elektrochemische Zelle, insbesondere für eine Brennstoffzelle, wobei die umlaufende Dichtung seitlich in die beiden Gasdiffusionselektroden (30) eindringt und mit dem einem umlaufenden Dichtrahmen (40) verbunden ist.

Vor diesem Hintergrund soll im Rahmen der vorliegenden Erfindung ein möglichst universell für elektrochemische Zellen (umfassend NT- oder HT-Brennstoffzellen) einsetzbares, wirksames und möglichst kostengünstig herstellbares Dichtungskonzept für MEAs bereitgestellt werden, welches in bevorzugter Weise auch zur Verwendung mit "Flush-cut"-MEAs geeignet sein soll.

Die vorstehende Aufgabe wird mit einem Verfahren zur Herstellung einer mit einer umlaufenden Dichtung versehenen MEA gemäß Anspruch. Bevorzugte Weiterbildungen der vorliegenden Erfindung ergeben sich aus den Unteransprüchen.

Das erfindungsgemäße Verfahren zur Herstellung einer mit einer umlaufenden Dichtung und einem umlaufenden Dichtrahmen versehenen Membran-Elektroden-Einheit für eine elektrochemische Zelle, insbesondere für eine Brennstoffzelle, umfassend die folgenden Schritte:
(A) Herstellen einer die Membran-Elektroden-Einheit bildenden sandwichartigen Anordnung aus einer Membran und zwei Gasdiffusionselektroden
(B) Verbinden der sandwichartigen Anordnung mit einer diese an ihrem seitlichen Außenrand umlaufenden Dichtung, welche gleichzeitig die Verbindung zu dem die Membran-Elektroden-Einheit seitlich umlaufenden Dichtrahmen herstellt,
wobei Schritt (B) unter Anwendung eines Pressvorgangs erfolgt und wobei das Dichtungsmaterial der die Membran-Elektroden-Einheit mit dem Dichtrahmen verbindenden Dichtung vor Durchführung des Pressvorgangs derart in einem zum seitlichen Außenrand der Membran-Elektroden-Einheit hin offenen Spalt des Dichtrahmens angeordnet wird, dass ein Teil des während des Pressvorgangs fließfähigen Dichtungsmaterials seitlich in die beiden Gasdiffusionselektroden eindringt.

Mit anderen Worten wird also im Rahmen der vorliegenden Erfindung ein Dichtungskonzept für eine MEA geschaffen, bei dem die erfindungsgemäß hergestellte MEA seitlich umlaufend mittels einer Dichtung abgedichtet ist, welche ihrerseits eine Verbindung zu einem die MEA umlaufenden Dichtrahmen herstellt. Die MEA wird somit gewissermaßen durch das Dichtungsmaterial innerhalb des die MEA (mit vorzugsweise geringem Abstand hierzu) umlaufenden Dichtrahmens gehalten. Dadurch dass das (später aushärtende) Dichtungsmaterial während des die Verbindung herstellenden Pressvorgangs seitlich in die zuvor offene Porenstruktur der beiden die Membran auf verschiednen Seiten bedeckenden Gasdiffusionselektroden eindringt, kann eine wirksame Randabdichtung der MEA erfolgen. Die Anordnung des Dichtungsmaterials in einem zum seitlichen Außenrand der Membran-Elektroden-Einheit hin offenen Spalt des Dichtrahmens erlaubt eine hohe Zuverlässigkeit für die qualitativ hochwertige und exakt reproduzierbare Herstellung des Verbunds aus MEA, Dichtung und Dichtrahmen mittels des erfindungsgemäß zur Anwendung kommenden Pressvorgangs, was insbesondere durch geeignete Dimensionierung des Spalts und der präzise vorgebbaren (Relativ-)Anordnung von Dichtrahmen, Dichtungsmaterial und MEA gewährleistet werden kann.

Ferner wird zur Herstellung einer ausreichenden Dichtwirkung in vorteilhafter Weise auch lediglich eine geringe Menge an Dichtungsmaterial benötigt und es kann durch die Anordnung des Dichtungsmaterials in einem lediglich zum seitlichen Rand der MEA hin offenen Spalt gewährleistet werden, dass kein bzw. nur wenig Dichtungsmaterial mit dem Presswerkzeug in Kontakt kommt, was eine schnelle und unproblematische Entformung des Presswerkzeugs ermöglicht.

Der bevorzugt aus einem unter den in einem Brennstoffzellenstapel gegebenen Druckverhältnissen (weitgehend) inkompressiblen Material bestehende Dichtrahmen kann mit seiner vorgegebenen Dicke im Sinne eines Anschlags den (Minimal-)Abstand zwischen den die MEA samt Dichtrahmen anoden- und kathodenseitig umgebenden Bipolar- bzw. Separatorplatten vorgeben. Die erfindungsgemäß realisierte Dichtung kann somit sowohl zur Herstellung der Dichtigkeit zwischen Anoden- und Kathodenseite als auch zur Herstellung der Dichtigkeit zur Umgebung dienen. Ferner kann durch geeignete Vorgabe der Dicke des Dichtrahmens die maximal erlaubte Kompression der MEA durch die Bipolarplatten präzise eingestellt werden.

Im Übrigen sei darauf hingewiesen, dass der Begriff "Membran" im Rahmen der vorliegenden Erfindung weit zu verstehen ist und insbesondere auch ionenleitfähige Elektrolytstrukturen erfasst, wie sie z.B. in einer PAFC zum Einsatz kommen.

In einer ersten bevorzugten Weiterbildung des erfindungsgemäßen Verfahrens kann vorgesehen sein, dass die Membran-Elektroden-Einheit, das Dichtungsmaterial und der Dichtrahmen zum Einsatz in einer NT-PEM- oder einer HT-PEM-Brennstoffzelle geeignet sind.

Zum Einsatz einer erfindungsgemäß hergestellten MEA in einer NT-PEM-Brennstoffzelle, bei denen z.B. Nafionbasierte Membranen zum Einsatz kommen können, können als Dichtungsmaterial für die die Membran umlaufende Dichtung, welche gleichzeitig die Verbindung zum Dichtrahmen herstellt, insbesondere Silikonkautschuk (VMQ), Fluorsilikonkautschuk (FVMQ), Fluorkautschuk (FKM/FPM), Perfluorkautschuk (FFKM/FFPM), Ethylen-Propylen-dienKautschuk (EPDM), Polyisobuten (PIB), Tetrafluorethylen/Propylen-Kautschuk (FEPM), Silikonharze, Polyimide, Polybenzoxazine, Epoxidharze und/oder Polyester zum Einsatz kommen.

Weiterhin kann im Rahmen der vorliegenden Erfindung besonders bevorzugt vorgesehen sein, dass der Pressvorgang ein Heißpressvorgang ist, bei dem das Dichtungsmaterial auf eine oberhalb seiner Schmelztemperatur bzw. oberhalb seines Schmelzbereichs liegende Temperatur erhitzt wird. Dies ist insbesondere dann zweckmäßig, wenn ein Dichtungsmaterial Verwendung findet, welches zur Herstellung der für das erfindungsgemäße Verfahren notwendigen Fließfähigkeit erhitzt werden muss, damit das im Rahmen der Erfindung erforderliche seitliche Eindringen des Dichtungsmaterials in die poröse Struktur der Gasdiffusionselektroden der MEA ermöglicht wird.

Ferner wurde im Rahmen der vorliegenden Erfindung herausgefunden, dass sich als Dichtungsmaterial - sowohl zum Einsatz in NT-Brennstoffzellen (z.B. NT-PEM- oder Direktmethanolbrennstoffzelle; engl.: direct methanol fuel cell - DMFC) als auch zum Einsatz in HT-(PEM)-Brennstoffzellen (z.B. auf HT-PEM-Basis) mit Betriebstemperaturen größer 100 °C bis hinauf zu Betriebstemperaturen von ca. 250°C - vorteilhaft auch thermoplastische Materialien eignen. Dabei ist während des Herstellungsvorgangs bevorzugt auf einen Heißpressvorgang zurückzugreifen, in welchem das thermoplastische Dichtungsmaterial über seinen Schmelzpunkt erhitzt wird, so dass dieses aufgrund seiner hierdurch maßgeblich erhöhten Fließfähigkeit seitlich in die zuvor offene Porenstruktur der beiden die Membran auf verschiednen Seiten bedeckenden Gasdiffusionselektroden eindringen kann.

Soweit in Schritt (B) das Dichtungsmaterial in einem Heißpressvorgang auf eine oberhalb seiner Schmelztemperatur bzw. oberhalb seines Schmelzbereichs liegende Temperatur erhitzt wird, so sei hierzu festgestellt, dass zu handelsüblichen Thermoplasten oder sonstigen Dichtungsmaterialien eine Herstellerangabe zu dessen jeweiliger Schmelztemperatur (bzw. den Temperaturober- und -untergrenzen des Schmelzbereichs) existiert und dass dieser in fachüblicher Weise, wie z.B. nach der US-Norm ASTM D4591, bestimmt werden kann.

Im Rahmen der vorliegenden Erfindung wurde insbesondere herausgefunden, dass man sich bei Wahl eines geeigneten thermoplastischen Dichtmaterials, insbesondere im Hinblick auf dessen Schmelztemperatur(bereich) unter Berücksichtigung der Betriebstemperatur der Brennstoffzelle, dessen Eigenschaft zunutze machen kann, dass dieses bereits bei Temperaturen (knapp) unterhalb seines Schmelzpunkts erweicht, so dass bei Betrieb der Brennstoffzelle in einem geeigneten Temperaturbereich etwaige durch Wärmedehnung verursachte mechanische Spannungen hinreichend von der aus einem thermoplastischen Material bestehenden Dichtung kompensiert werden können.

Ein weiterer Vorteil der Verwendung eines thermoplastischen Dichtungsmaterials liegt darin, dass hiermit die Herstellung der Dichtung - im Vergleich zu der aus dem Stand der Technik bekannten Verwendung von Elastomeren - deutlich beschleunigt werden kann. Während ein als Dichtungsmaterial geeignetes Elastomer in der Regel eines thermisch zu aktivierenden Vernetzers bedarf und zu dessen Aushärtung eine nicht unerhebliche Zeitspanne benötigt wird, bleibt ein thermoplastisches Dichtungsmaterial sofort nach Abkühlung unter seinen Schmelzpunkt formstabil, wodurch bei dem erfindungsgemäßen Verfahren auch die Herstellungszeit für eine mit einer umlaufenden Dichtung versehene MEA reduziert werden kann.

Soweit im Rahmen der vorliegenden Erfindung auf ein thermoplastisches Dichtungsmaterial zurückgegriffen wird, kommen hierfür grundsätzlich alle bekannten thermoplastischen Materialien (wie z.B. Fluorpolymere, Polytetrafluorethylen (PTFE), Ethylen-Tetrafluorethylen-Copolymer (ETFE), Perfluorethylenpropylen-Copolymer (FEP), Perfluoralkoxy-Copolymer (PFA), Tetrafluorethylen-Hexafluorpropylen-Vinylidenfluorid-Terpolymer (THV), Polychlortrifluorethylen (CTFE), Polyvinylidenfluorid (PVDF), Flüssigkristalline Polymere (LCP), Polyetheretherketon (PEEK), Polyetherketon (PEK), Polyethersulfon (PES), Polyphenylensulfid (PPS), Polysulfon (PSU), Polybenzimidazol (PBI), etc.) in Frage, die eine für die jeweilige Anwendung geeignete Temperatur-, Säure- und Wasserdampfbeständigkeit sowie ein für den jeweiligen Einsatzzweck geeignetes Temperaturverhalten aufweisen.

Bevorzugt findet als thermoplastisches Dichtungsmaterial vorteilhaft ein Fluorpolymer, insbesondere THV, Verwendung.

Bei THV handelt es sich um ein chemisch besonders beständiges Terpolymer aus Tetrafluoroethylen (CF₂-CF₂), Hexafluorpropylen (CF₃-CF-CF₂) und Vinylidenfluorid (CF₂-CH₂), bei welchem unter Variation der relativen Anteile der vorgenannten Bestandteile der Schmelzpunkt (also die Schmelztemperatur bzw. der Schmelztemperaturbereich) des Materials über einen weiten Bereich einstellbar und welches besonders kostengünstig herstellbar ist.

Soweit im Rahmen des erfindungsgemäßen Verfahrens zur Herstellung des Verbunds aus MEA, Dichtung und Dichtrahmen ein Heißpressvorgang erfolgt, kann dabei in Schritt (B) des erfindungsgemäßen Verfahrens entweder eine bereits zuvor zu einem Verbund heißverpresste MEA verwendet werden oder es können mit dem das Dichtungsmaterial erhitzenden Heißpressvorgang - unter Verwendung eines zuvor noch nicht heißverpressten Sandwichs aus zwei Gasdiffusionselektroden mit dazwischen liegender Membran - gleichzeitig auch die Membran und die beidseits hierzu angeordneten Gasdiffusionselektroden miteinander heißverpresst werden.

Ferner kann im Rahmen der Erfindung bevorzugt vorgesehen sein, dass der Dichtrahmen aus wenigstens zwei Lagen eines inkompressiblen Materials mit niedrigem Wärmeausdehnungskoeffizienten, insbesondere aus gewebeverstärktem Kunststoff, hergestellt wird. Unter "inkompressibel" ist dabei ein Material zu verstehen, das sich bei üblicher Verspannung zwischen den Bipolar- bzw. Separatorplatten (d.h. bei den in einer Brennstoffzelle hierbei typischerweise auf den Brennstoffzellenstapel ausgeübten Kräften und den sich hierdurch einstellenden (Druck-)Verhältnissen) nicht oder nur unwesentlich komprimiert, d.h. seine vorgegebene Dicke weitgehend erhält. Ein niedriger Wärmeausdehnungskoeffizient ist insbesondere dann gegebenen, wenn dieser - bei 20°C - einen Wert von kleiner als 3*10⁻⁵ K⁻¹ aufweist. Ein gewebeverstärkter Kunststoff, wie z.B. ein glasfaserverstärktes PTFE (z.B. unter der Bezeichnung "Chemfab" erhältlich), wie er besonders bevorzugt zum Einsatz kommt, erfüllt diese Eigenschaften.

Wenn im Rahmen der vorliegenden Erfindung auf ein thermoplastisches Dichtungsmaterial zurückgegriffen wird und der Dichtrahmen aus einem Material mit niedrigem Wärmeausdehnungskoeffizienten hergestellt ist, wie vorstehend erläutert, so ergibt sich wegen des in der Regel auch besonders niedrigen Wärmeausdehnungskoeffizienten einer typischen MEA und der ausschließlich über den Thermoplasten bei hohen Temperaturen hergestellten Verbindung zwischen MEA und Dichtrahmen insgesamt ein Aufbau, der ein Aufwölben der MEA bei Raumtemperatur verhindert, was deren Handhabbarkeit verbessert.

Weiterhin kann in abermaliger Weiterbildung der vorliegenden Erfindung besonders bevorzugt vorgesehen sein, dass jede Lage des Dichtrahmens aus wenigstens zwei Teilen eines gewebeverstärkten Kunststoffs zusammengesetzt ist. Dabei kann im Übrigen in besonders einfacher Weise gewährleistet werden, dass die einzelnen Lagen und/oder die einzelnen Teile der verschiedenen Lagen des Dichtrahmens in Schritt (B) durch das Dichtungsmaterial dicht miteinander verbunden werden. Ferner kann, wie dies nachfolgend anhand eines Ausführungsbeispiels noch erläutert wird, ein nahezu verschnittloser Verbrauch des für den Dichtrahmen verwendeten Materials gewährleistet werden.

Wie bereits weiter oben erläutert, kann die MEA entweder bereits vor Durchführung des Schrittes (B) oder gleichzeitig mit Durchführung des Schrittes (B) heißverpresst werden, wobei mittels der letztgenannten Variante ein ansonsten separat durchzuführender Heißvpressvorgang eingespart werden kann.

Ferner kann im Rahmen der vorliegenden Erfindung bevorzugt vorgesehen sein, dass die MEA nach dem Flush-cut-Verfahren hergestellt wird, was ebenfalls eine besonders kostensparende Herstellung geeignet abgedichteter MEAs ermöglicht.

Wie dies bereits weiter oben anhand des bevorzugt verwendeten Materials namens THV erläutert wurde, kann ein im Rahmen der vorliegenden Erfindung verwendetes thermoplastisches Dichtungsmaterial bevorzugt aus wenigstens zwei Monomer-Komponenten hergestellt sein, deren Anteile Einfluss auf den Schmelzpunkt, d.h. die Schmelztemperatur bzw. den Schmelzbereich, des thermoplastischen Dichtungsmaterials haben. Hierdurch lässt sich eine besonders einfache Anpassung des Schmelzpunkts des Dichtungsmaterials an die Betriebstemperatur, für welche die entsprechend hergestellten MEAs geeignet sein sollen, erzielen.

In besonders bevorzugter Weise kann dabei dafür Sorge getragen sein, dass die Membran-Elektroden-Einheit zur Verwendung in einer Brennstoffzelle bei einer vorgegebenen Soll-Betriebstemperatur bzw. innerhalb eines vorgegebenen Soll-Betriebstemperaturbereichs vorgesehen ist, wobei die Schmelztemperatur bzw. der Schmelzbereich des Dichtungsmaterials (z.B. durch geeignete Wahl der Art und/oder Zusammensetzung des Dichtungsmaterials) derart gewählt bzw. eingestellt ist, dass die Schmelztemperatur bzw. der Schmelzbereich des Dichtungsmaterials oberhalb, bevorzugt jedoch nicht mehr als 10° bis 30°C oberhalb, der Soll-Betriebstemperatur bzw. des Soll-Betriebstemperaturbereichs liegt. Hierdurch kann gewährleistet werden, dass die randseitig erfolgende Abdichtung einer MEA, mit welcher im erfindungsgemäßen Sinne gleichzeitig die Verbindung zu einem die MEA umlaufenden Dichtrahmen hergestellt wird, bei bestimmungsgemäßen Einsatz in einer Brennstoffzelle mit der vorgegebenen Soll-Betriebstemperatur hinreichend weich ist, um etwaige mechanische Spannungen auszugleichen, was insbesondere bei Verwendung thermoplastischer Dichtungsmaterialien sinnvoll ist. Ferner hat sich gezeigt, dass dabei eine solche Geometrie für den Verbund aus MEA, Dichtung und Dichtrahmen gewählt werden kann, dass das die MEA umgebende Dichtungsmaterial, welches gewissermaßen eine Brücke zwischen der MEA und dem Dichtrahmen herstellt, im fertigen Brennstoffzellenstapel in Kontakt mit den beidseits der MEA gelegenen Bipolarplatten gelangen und mit diesen - infolge seiner Weichheit bei Betriebstemperatur - verkleben kann, was die Dichtwirkung des Dichtverbunds nochmals verbessern kann.

Wie bereits einleitend erwähnt, ist Gegenstand der vorliegenden Offenbarung jedoch nicht nur das vorstehend erläuterte Herstellungsverfahren, sondern auch eine entsprechend hergestellte Membran-Elektroden-Einheit mit einer umlaufenden Dichtung und umlaufendem Dichtrahmen für eine elektrochemische Zelle, insbesondere für eine Brennstoffzelle.

Es versteht sich, dass alle bereits vorstehend in Zusammenhang mit dem erfindungsgemäßen Verfahren erläuterten Aspekte und bevorzugten Weiterbildungen gleichermaßen auf die MEA anwendbar sind, so dass zur Vermeidung von Wiederholungen hierauf verwiesen wird. Die offenbarungsgemäß mit einer umlaufenden Dichtung und einem Dichtrahmen versehenen MEAs können komplett vorgefertigt werden und können in besonders einfacher Weise zum Aufbau eines Zellstapel für eine elektrochemische Zelle (z.B. Brennstoffzelle) Verwendung finden.

Eine offenbarungsgemäße Membran-Elektroden-Einheit mit umlaufender Dichtung ist dabei bevorzugt zum Einsatz in einer NT-PEM-Brennstoffzelle bei Soll-Betriebstemperaturen < 100°C oder in einer HT-PEM-Brennstoffzelle oder in einer phosphorsauren Brennstoffzelle (PAFC) bei Soll-Betriebstemperaturen bis 150°C, bis 200°C oder bis 250°C geeignet.

Ferner betrifft die Offenbarung auch einen Brennstoffzellen-Stapel mit einer Mehrzahl an durch Bipolarplatten getrennten Membran-Elektroden-Einheiten der erfindungsgemäßen Art. Auch hierfür gelten ersichtlich die gleichen Aspekte und bevorzugten Weiterbildungen, wie sie vorstehend bereits erläutert wurden.

Insbesondere betrifft die Offenbarung somit auch einen Brennstoffzellenstapel der vorgenannten Art, bei dem jede Bipolarplatte (zu verschiedenen Seiten) den Dichtrahmen der ihr jeweils angrenzenden Membran-Elektroden-Einheiten anliegt und wobei jeder Dichtrahmen im Sinne eines Anschlags den minimalen Abstand zwischen den der betreffenden Membran-Elektroden-Einheit beidseits angrenzenden Bipolarplatten vorgibt. Die Dichtrahmen der verschiedenen MEAs eines solchen Brennstoffzellenstapels bilden also gewissermaßen einen "Hard Stop", mit welchem eine Beschädigung der einzelnen MEAs durch die Bipolarplatten infolge zu hoher Kompression vermieden werden kann.

Selbstverständlich kann der Dichtrahmen seinerseits durch geeignete Dichtmittel gegen die Bipolarplatten abgedichtet sein oder eine weitere Dichtung beinhalten, was insbesondere dann von Vorteil ist, wenn die im Rahmen des Betriebs einer Brennstoffzelle zu- bzw. abzuführenden Medien durch ein internes Manifold des Brennstoffzellenstapels zu- und abgeführt werden, wobei hierfür geeignet durch den Dichtrahmen hindurchzuführende und abzudichtende Kanäle vorgesehen sein können.

Generell gilt jedoch, dass im Rahmen des offenbarungsgemäßen Dichtkonzepts zur Zu- und Abführung der im Rahmen der Brennstoffwandlung benötigten bzw. abzuführenden Medien ein externes oder internes Manifold vorgesehen sein kann.

Nachfolgend werden verschiedene Ausführungsbeispiele der Erfindung anhand der Zeichnung näher erläutert. Dabei zeigt
- Fig. 1: eine Illustration eines Ausführungsbeispiels des erfindungsgemäßen Verfahrens zur Erzeugung einer erfindungsgemäßen Membran-Elektroden-Einheit mit umlaufender Dichtung aus einem thermoplastischen Material und einem die MEA samt Dichtung umgebenden Dichtrahmen,
- Fig. 2: eine schematische Darstellung eines Ausführungsbeispiels einer offenbarungsgemäßen Membran-Elektroden-Einheit mit umlaufender Dichtung und Dichtrahmen
- Fig. 3: eine Illustration zur besonders zweckmäßigen Herstellung eines im Rahmen der vorliegenden Erfindung verwendbaren Dichtrahmens,
- Fig. 4: Lebensdauermessungen zur zeitlichen Entwicklung der Zellspannung an erfindungsgemäß hergestellten Baueinheiten aus MEA mit umlaufender Dichtung im Vergleich zu Referenz-MEAs und
- Fig. 5: Messergebnisse zu verschiedenen Start-Stop-Zyklen an den gemäß Fig. 4 bereits einem Lebensdauertest unterzogenen MEAs.

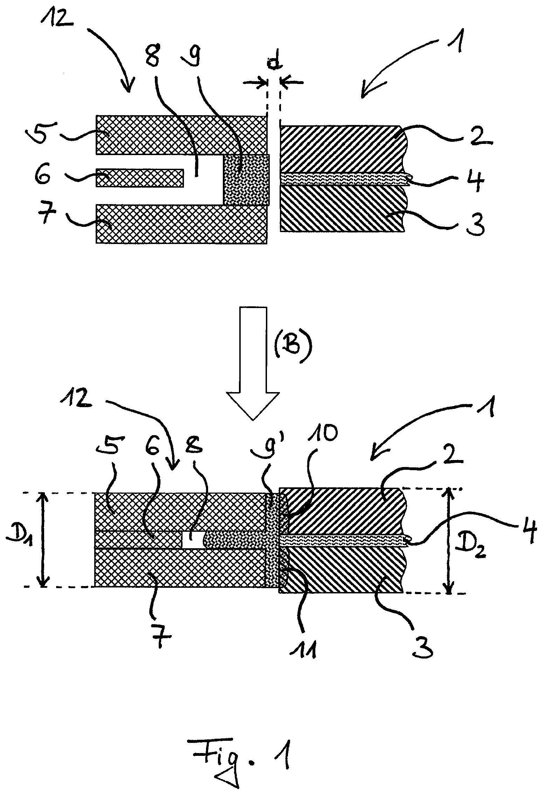

Fig. 1 zeigt in einer oberen Darstellung rechtsseitig einen Randbereich einer in einem ersten Verfahrensschritt (A) bereitgestellten (und vorliegend bereits heißverpressten) MEA 1, die in üblicher Weise durch eine sandwichartige Anordnung aus zwei Gasdiffusionselektroden 2, 3 und einer dazwischen liegenden (Polymer-Elektrolyt-) Membran 4 gebildet ist. Links daneben ist mit vorgegebenen Abstand d ein aus drei - noch nicht miteinander verbundenen - Lagen 5, 6, 7 bestehender Dichtrahmen 12 angeordnet, der einen zum Außenrand der MEA 1 hin offenen Spalt 8 ausbildet, in welchem - benachbart zum seitlichen Außenrand der MEA 1 und diese vollumfänglich umlaufend - ein Dichtungsmaterial 9 (z.B. THV) angeordnet ist.

In einem Verfahrensschritt (B) wird sodann die in Fig. 1 oben dargestellte Anordnung zwischen Pressplatten verpresst, wobei in einer Ausführungsvariante der vorliegenden Erfindung ein Heißpressvorgang zwischen beheizbaren Pressplatten stattfindet, wobei durch geeignete Vorgabe der Temperatur des Heißpressvorgangs sichergestellt wird, dass das z.B. thermoplastische Dichtungsmaterial 9 bis (deutlich) über seinen Schmelzpunkt (d.h. seine Schmelztemperatur bzw. das Schmelzintervall) erhitzt wird, so dass es in fließfähigen Zustand gebracht wird.

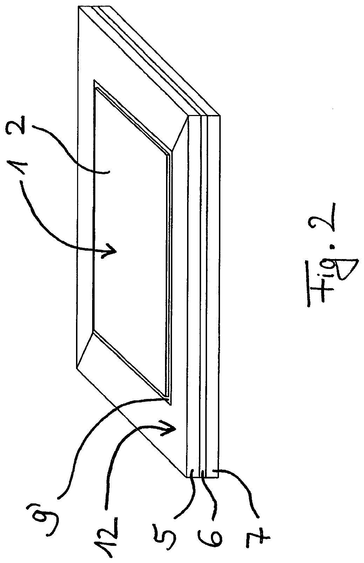

Nach anschließender Abkühlung ergibt sich dann der in Fig. 1 unten im Teilquerschnitt und in Fig. 2 in perspektivischer Ansicht vollständig dargestellte Verbund aus einer MEA 1 mit umlaufender Dichtung 9' und Dichtrahmen 12.

Während des Heißpressvorgangs können sich einerseits die drei im vorliegenden Beispiel aus einem gewebeverstärkten Kunststoff (z.B. Chemfab) bestehenden Lagen 5, 6, 7 des Dichtrahmens 12 miteinander fest verbinden. Ferner kann das in dem zum Außenrand der MEA 1 hin offenen Spalt 8 des Dichtrahmens 12 angeordnete Dichtungsmaterial 9 beim Heißpressvorgang in den zwischen Dichtrahmen 12 und MEA 1 bestehenden Spalt eindringen und sich dabei (ausschließlich) vom seitlichen Außenrand der MEA 1 aus sowohl mit der Membran 4 als auch mit den Gasdiffusionselektroden 2, 3 verbinden, wobei ein Teil des Dichtungsmaterials 9 aufgrund seiner Fließfähigkeit bei dem Heißpressvorgang beidseits der Membran 4, nämlich in den Bereichen 10, 11, seitlich in die offene Porenstruktur der Gasdiffusionselektroden 2, 3 eindringt. Die Gasdiffusionselektroden 2, 3 werden dabei in vorteilhafter Weise nicht auf ihrer von der Membran 4 abgewandten Seite von Dichtungsmaterial 9 bedeckt.

Es sei jedoch ausdrücklich angemerkt, dass z.B. im Falle der Verwendung von für NT-PEM-Brennstoffzellen geeigneten Dichtungsmaterialien, wie diese weiter oben bereits erwähnt wurden, nicht zwingend eine Erhitzung während des Pressvorgangs erfolgen muss.

Die die MEA 1 nach erfolgter Abkühlung bzw. Aushärtung seitlich vollständig umlaufende Dichtung 9' stellt dann eine Verbindung zwischen der MEA 1 und dem Dichtrahmen 12 her. Mit anderen Worten wird also die MEA 1 innerhalb des Dichtrahmens 12 ausschließlich durch die Dichtung 9' gehalten.

Der Dichtrahmen 12 hat dabei eine - durch die Dimensionierung der drei Lagen 5, 6, 7 vorgegebene Dicke D₁, welche geringfügig kleiner ist als die Dicke D₂ der MEA 1. Wenn nun der Verbund aus MEA 1, Dichtung 9' und Dichtrahmen 12 in üblicher Weise zwischen den Bipolar- bzw. Separatorplatten einer Brennzoffzelle (oder einer sonstigen elektrochemischen Zelle) angeordnet wird, so stellt der aus einem weitgehend inkompressiblen Material hergestellte Dichtrahmen 12 einen Anschlag ("HardStop") für die Bipolarplatten dar, wodurch die maximal mögliche Kompression der geringfügig dickeren MEA 1 vorgeben ist. Ferner kann die während des Betriebs der Brennstoffzelle erweichende Dichtung 9' sich mit den ober- und unterseitig hieran anliegenden Bipolarplatten der Brennstoffzelle verkleben, wodurch - ohne des Bedarfs für weitere Dichtmittel im Bereich des Dichtrahmens 12 - eine gute Dichtwirkung nach außen erzielbar ist.

Das konkret für die Herstellung der Dichtung 9' zu verwendende Dichtungsmaterial 9 kann in besonders bevorzugter Weise unter Berücksichtigung der vorgegebenen Betriebstemperatur der (nicht dargestellten) elektrochemischen Zelle gewählt werden, in welche die MEA 1 samt Dichtung 9' und Dichtrahmen 12 verbaut werden soll. Dabei kann vorteilhaft ein solches thermoplastisches Material 9 zur Anwendung kommen, dessen Schmelzpunkt knapp oberhalb, vorteilhaft nicht mehr als 10° - 30°C oberhalb der Betriebstemperatur der elektrochemischen Zelle (z.B. Brennstoffzelle) liegt, so dass die die MEA 1 umgebende Dichtung 9' beim Betrieb der Brennstoffzelle etwas erweicht und hierdurch etwaige mechanische Spannungen aufnehmen kann. Bereits das thermoplastische Material THV, welches weiter oben bereits erwähnt wurde und vergleichsweise kostengünstig ist, existiert in verschiedensten Zusammensetzungen mit verschiedenen Schmelztemperaturen. So sind z.B. bei 3M Dyneon die Materialien "THV 221GZ", "THV 500GZ", "THV 610GZ" und "THV 815GZ" mit Schmelztemperaturen von (in gleicher Reihenfolge) 115°C, 165°C, 185°C und 225°C erhältlich. Das Material "THV 221GZ" eignet sich vorteilhaft zur Verwendung in NT-PEM-Brennstoffzellen, während die drei weiteren vorgenannten THV-Varianten in vorteilhafter Weise zur Verwendung in HT-PEM-Brennstoffzellen geeignet sind.

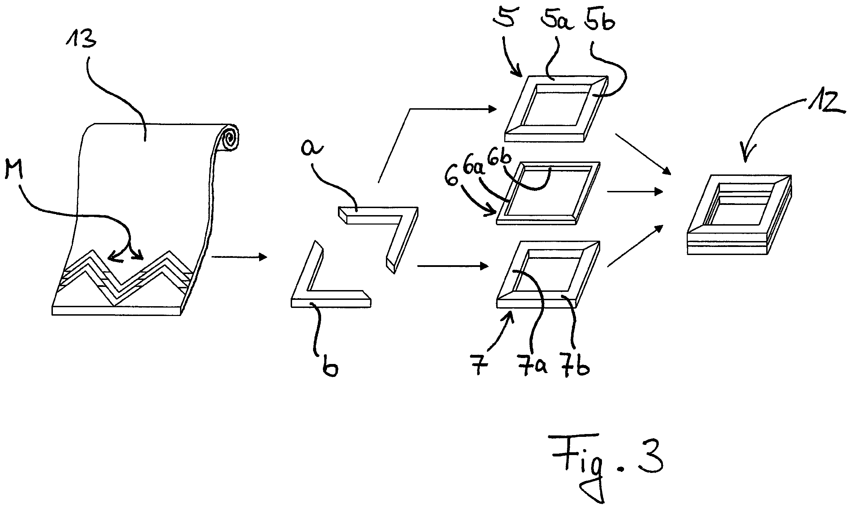

Fig. 3 zeigt eine Illustration zur besonders zweckmäßigen Herstellung eines im Rahmen der vorliegenden Erfindung verwendbaren Dichtrahmens 12. Dabei können aus einem als Rollenware 13 vorliegenden Material unter Verwendung eines fischgrätartigen Schnittmusters M einzelne Teile, insbesondere L-förmige Schenkel a, b, herausgeschnitten werden. Je zwei solcher L-förmigen Schenkel 5a, 5b; 6a, 6b; 7a, 7b können dann zu einer Lage 5, 6, 7 des späteren Dichtrahmens 12 zusammengesetzt werden, wobei es sich bei deren Anordnung zur Herstellung des Dichtrahmens 12 in besonders vorteilhafter Weise anbietet, wenn je zwei benachbarte Lagen um 90° zueinander versetzt orientiert sind, so dass die in den einzelnen Lagen 5, 6, 7 zwischen den je zwei L-förmigen Schenkeln gegebenen Stoßstellen nicht einander benachbart sind. Vorliegend sind die Einzelteile 5a, 5b, 7a, 7b der oberen und unteren Lage 5, 7 des Dichtrahmens 12 aus der in Fig. 3 links dargestellten Rollenware 13 gewonnen, während die Teile 6a, 6b der dünneren Lage 6 - auf identische Weise - aus einer Rolle dünneren Materials gewonnen wurde.

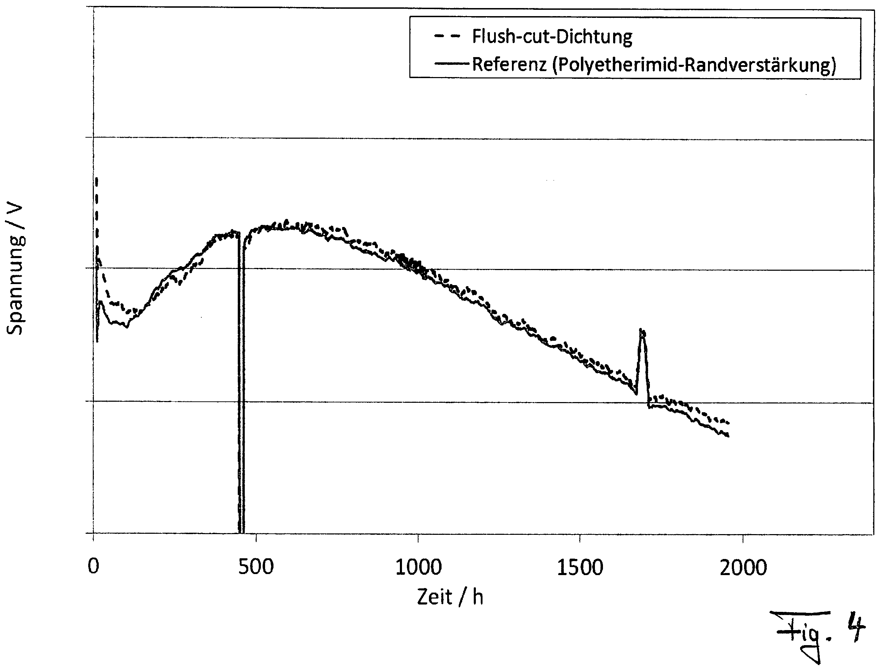

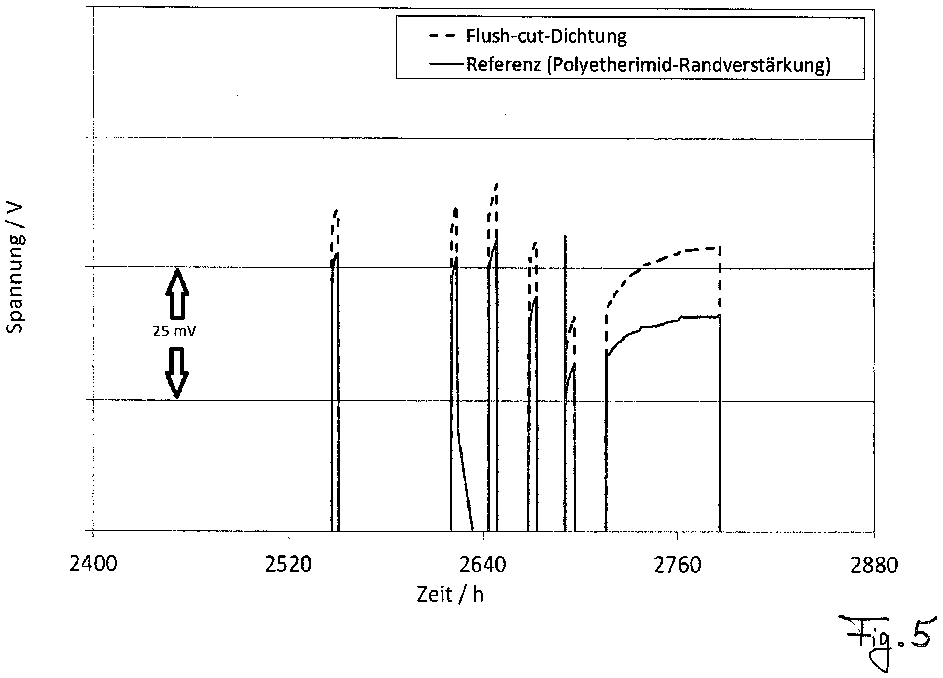

Mit erfindungsgemäß hergestellten Membran-Elektroden-Einheiten 1 mit umlaufender Dichtung 9' und Dichtrahmen 12 konnten auch bereits verschiedene Tests durchgeführt werden, deren Ergebnisse nachfolgend mit Verweis auf die Fig. 4 und 5 erläutert werden.

Die getesteten und im offenbarungsgemäßen Sinne mit einer umlaufenden Dichtung 9' und einem Dichtrahmen 12 ausgestatteten MEAs wurden in exakt der vorstehend erläuterten Art und Weise hergestellt. Sie enthalten eine für den Betrieb in einer HT-PEM-Brennstoffzelle bei einer Betriebstemperatur von 160° geeignete phosphorsäuredotierte Membran auf PBI-Basis. Es handelt sich um Flush-cut-MEAs mit bündig zur Membran abschließenden Gasdiffusionselektroden.

Als thermoplastisches Material für die Dichtung wurde das kommerziell von 3M Dyneon erhältliche Material "THV 500GZ" verwendet, welches eine - gemäß der Norm ASTM D4591 ermittelte - Schmelztemperatur von 165°C aufweist, wobei die in Schritt (B) des erfindungsgemäßen Verfahrens erfolgende Herstellung einer Verbindung zwischen der Dichtung und dem Außenrand der MEA (mit seitlichem Eindringen des Dichtungsmaterials in die Gasdiffusionselektroden) einerseits und dem Dichtrahmen andererseits im Rahmen eines Heißpressvorgangs bei einer Temperatur von 230°C durchgeführt wurde. Als Material für den Dichtrahmen wurden drei Lagen eines glasfaserverstärkten PTFE (erhältlich unter der Bezeichnung "Chemfab") verwendet.

Die aktive Fläche der quadratischen MEA (124 mm Kantenlänge) hatte 153 cm². Die Dicke der MEA betrug 620 *µ*m. Der die MEA umgebende quadratische Dichtrahmen hatte im Bereich der oberen und unteren Lagen 5, 7 eine äußere Kantenlänge von 144 mm und eine innere von 124.5 mm. Der Zwischenrahmen hatte eine äußere Kantenlänge von 144 mm und eine innere von 135.5 mm. Die drei Lagen des glasfaserverstärkten PTFE hatten eine Dicke von jeweils 225 *µ*m (äußere Lagen 5 und 7) und 120 *µ*m (Zwischenlage 6) .

Die "THV 500GZ"-Lage 9 war vor dem Heißpressvorgang 200 *µ*m dick. Der Heißpressvorgang erfolgte bei 230°C, dauerte 4 min und die Presskraft war 77 kN. Die aktive Fläche der MEA wurde dabei drucklos gehalten. Der resultierende Pressdruck auf dem durch den Dichtrahmen gebildeten Hardstop lag somit bei 3.2 kN/cm² - definiert durch die Fläche des Zwischenrahmens von 23.8 cm². Die Dicke des Dichtrahmens nach dem Vorgang betrug 540 *µ*m.

Drei dieser erfindungsgemäß hergestellten Baueinheiten aus MEA, thermoplastischer Dichtung und Dichtrahmen wurden gleichzeitig mit vier Referenz-MEAs in einen Testbrennstoffzellenstapel mit 20 Zellen eingebaut, der unter Verwendung eines simulierten Reformats bei einer Betriebstemperatur von 160°C (also bei nur 5°C unterhalb des Schmelzpunktes des verwendeten Dichtungsmaterials) betrieben wurde.

Fig. 4 zeigt den zeitlichen Verlauf des Mittelwerts der (zum Zwecke einer rein qualitativen Gegenüberstellung nicht in absoluten Werten angegeben) Zellspannung an den drei erfindungsgemäßen Baueinheiten mit "Flush-cut-Dichtung" im Vergleich zum Mittelwert der Zellspannung der in dem gleichen Testbrennstoffzellenstapel betriebenen Referenz-MEAs, bei denen MEAs mit über die Gasdiffusionselektroden hinausstehender Membran und einer Polyetherimid-Randverstärkung, wie Sie für HT-PEM-Brennstoffzellen derzeit häufig zur Anwendung kommen, verwendet wurden.

Dabei zeigt sich, dass die offenbarungsgemäß hergestellten MEAs mit THV-Dichtung und Dichtrahmen bei einem Dauerbetrieb von beinahe 2000 Stunden unter ansonsten identischen Bedingungen eine sogar geringfügig höhere Zellspannung liefern konnten als die in ihrer Herstellung deutlich teureren MEAs mit Poly(ether)imid-Randverstärkung. Ferner konnte ermittelt werden, dass die Zellspannungen der drei offenbarungsgemäß hergestellten MEAs mit Dichtung und Dichtrahmen nur außerordentlich geringe Abweichungen untereinander gezeigt haben, was die gute Reproduzierbarkeit einer qualitativ hochwertigen Herstellung des MEA-Dichtrahmenverbunds zeigt. Der in Fig. 4 erkennbare Einbruch der Zellspannung bei einer Laufzeit von knapp unterhalb 500 Betriebsstunden resultierte aus einer kurzfristigen Abschaltung der Testbrennstoffzelle. Der bei ca. 1700 Betriebsstunden erkennbare (sprunghafte) Anstieg der jeweiligen Zellspannungen war das Ergebnis einer kurzfristigen Abschaltung der Kohlenmonoxid-Zufuhr zu dem simulierten Reformat, welches den jeweiligen Brennstoffzellen des Testbrennstoffzellenstapels zugeführt wurde.

Fig. 5 zeigt schließlich noch die ermittelten Mittelwerte der Zellspannungen bei zu späteren Zeitpunkten erfolgten Start-Stop-Zyklen verschiedener Dauer, welche an den gleichen MEAs durchgeführt wurden, an denen bereits die Testmessungen aus Fig. 4 durchgeführt wurden. Die Messdaten aus Fig. 5 zeigen, dass die offenbarungsgemäß mit einer umlaufenden Dichtung aus thermoplastischen Material ausgestatteten MEAs auch nach langer Betriebsdauer den Referenz-MEAs noch (geringfügig) überlegen waren.

## Patentansprüche

1. Verfahren zur Herstellung einer mit einer umlaufenden Dichtung und einem umlaufenden Dichtrahmen versehenen Membran-Elektroden-Einheit für eine elektrochemische Zelle, insbesondere für eine Brennstoffzelle, umfassend die folgenden Schritte:
(A) Herstellen einer die Membran-Elektroden-Einheit bildenden sandwichartigen Anordnung aus einer Membran und zwei Gasdiffusionselektroden
(B) Verbinden der sandwichartigen Anordnung mit einer diese an ihrem seitlichen Außenrand umlaufenden Dichtung, welche gleichzeitig die Verbindung zu dem die Membran-Elektroden-Einheit seitlich umlaufenden Dichtrahmen herstellt,
wobei Schritt (B) unter Anwendung eines Pressvorgangs erfolgt und
wobei das Dichtungsmaterial der die Membran-Elektroden-Einheit mit dem Dichtrahmen verbindenden Dichtung vor Durchführung des Pressvorgangs derart in einem zum seitlichen Außenrand der Membran-Elektroden-Einheit hin offenen Spalt des Dichtrahmens angeordnet wird, dass ein Teil des während des Pressvorgangs fließfähigen Dichtungsmaterials seitlich in die beiden Gasdiffusionselektroden eindringt.

2. Verfahren nach Anspruch 1,
**dadurch gekennzeichnet,**
**dass** die Membran-Elektroden-Einheit, das Dichtungsmaterial und der Dichtrahmen zum Einsatz in einer NT-PEM- oder einer HT-PEM-Brennstoffzelle geeignet sind.

3. Verfahren nach Anspruch 1 oder 2,
**dadurch gekennzeichnet, dass** der Pressvorgang ein Heißpressvorgang ist, bei dem das Dichtungsmaterial auf eine oberhalb seiner Schmelztemperatur bzw. oberhalb seines Schmelzbereichs liegende Temperatur erhitzt wird.

4. Verfahren nach einem der vorangehenden Patentansprüche,
**dadurch gekennzeichnet,**
**dass** das Dichtungsmaterial thermoplastisch und insbesondere ein Fluorpolymer, insbesondere THV, ist.

5. Verfahren nach einem der vorangehenden Patentansprüche,
**dadurch gekennzeichnet,**
**dass** der Dichtrahmen aus wenigstens zwei Lagen eines inkompressiblen Materials mit niedrigem Wärmeausdehnungskoeffizienten, insbesondere aus gewebeverstärktem Kunststoff, hergestellt wird.

6. Verfahren nach Anspruch 5,
**dadurch gekennzeichnet,**
**dass** jede Lage des Dichtrahmens aus wenigstens zwei Teilen eines gewebeverstärkten Kunststoffs zusammengesetzt ist.

7. Verfahren nach einem der vorangehenden Ansprüche,
**dadurch gekennzeichnet,**
**dass** die Membran-Elektroden-Einheit vor Durchführung des Schrittes (B) oder gleichzeitig mit Durchführung des Schrittes (B) heißverpresst wird.

8. Verfahren nach einem der vorangehenden Ansprüche,
**dadurch gekennzeichnet,**
**dass** die Membran-Elektroden-Einheit nach dem Flushcut-Verfahren hergestellt wird.

9. Verfahren nach Anspruch 4,
**dadurch gekennzeichnet,**
**dass** das thermoplastische Dichtungsmaterial aus wenigstens zwei Monomer-Komponenten hergestellt wird, deren Anteile Einfluss auf die Schmelztemperatur bzw. den Schmelzbereich des thermoplastischen Dichtungsmaterials haben.

10. Verfahren nach Anspruch 4,
**dadurch gekennzeichnet,**
**dass** die Membran-Elektroden-Einheit zur Verwendung in einer Brennstoffzelle bei einer vorgegebenen Soll-Betriebstemperatur bzw. innerhalb eines vorgegebenen Soll-Betriebstemperaturbereichs vorgesehen ist, wobei die Schmelztemperatur bzw. der Schmelzbereich des thermoplastischen Dichtungsmaterials derart gewählt bzw. eingestellt ist, dass die Schmelztemperatur bzw. der Schmelzbereich des Dichtungsmaterials oberhalb, bevorzugt jedoch nicht mehr als 10° bis 30°C oberhalb, der Soll-Betriebstemperatur bzw. des Soll-Betriebstemperaturbereichs liegt.

## Claims

1. A method for making a membrane electrode assembly provided with a peripheral seal and a peripheral sealing frame for an electrochemical cell, especially for a fuel cell, comprising the following steps:
(A) making of a sandwich arrangement forming the membrane electrode assembly from a membrane and two gas diffusion electrodes
(B) connecting of the sandwich arrangement to a seal encircling it on its outer side edge, which at the same time provides the connection to the sealing frame encircling the membrane electrode assembly at the side,
wherein step (B) is done by using a pressing operation and wherein the sealing material of the seal bonding the membrane electrode assembly to the sealing frame is arranged in a gap of the sealing frame open to the outer side edge of the membrane electrode assembly prior to performing the pressing operation, such that a portion of the sealing material which is flowable during the pressing operation penetrates laterally into the two gas diffusion electrodes.

2. The method of claim 1, wherein the membrane electrode assembly, the sealing material and the sealing frame are suitable for use in a LT-PEM or HT-PEM fuel cell.

3. The method of claim 1 or claim 2, wherein the pressing operation is a hot pressing operation during which the sealing material is heated to a temperature lying above its melting temperature or above its melting range.

4. The method of one of the preceding claims, wherein the sealing material is thermoplastic and in particular a fluoropolymer, especially THV.

5. The method of one of the preceding claims, wherein the sealing frame is made from at least two layers of an incompressible material with low coefficient of thermal expansion, especially a fabric-reinforced plastic.

6. The method of claim 5, wherein each layer of the sealing frame is composed of two pieces of a fabric-reinforced plastic.

7. The method of one of the preceding claims, wherein the membrane electrode assembly is hot pressed before carrying out step (B) or at the same time as carrying out step (B).

8. The method of one of the preceding claims, wherein the membrane electrode assembly is made by the flush cut process.

9. The method of claim 4, wherein the thermoplastic sealing material is made from at least two monomer components, whose proportions have influence on the melting temperature or the melting range of the thermoplastic sealing material.

10. The method of claim 4, wherein the membrane electrode assembly is provided for use in a fuel cell at a predetermined nominal operating temperature or within a predetermined nominal operating temperature range, wherein the melting temperature or the melting range of the thermoplastic sealing material is selected or adjusted so that the melting temperature or the melting range of the sealing material lies above, but preferably not more than 10° to 30° C above, the nominal operating temperature or the nominal operating temperature range.

## Revendications

1. Procédé, destiné à fabriquer un ensemble membrane-électrodes, muni d'un joint périphérique et d'un cadre d'étanchéité périphérique, pour une cellule électrochimique, notamment pour une pile à combustible, comprenant les étapes suivantes consistant à :
(A) fabriquer un agencement en sandwich formant l'ensemble membrane-électrodes, composé d'une membrane et de deux électrodes à diffusion de gaz
(B) assembler l'agencement en sandwich à l'aide d'un joint entourant celui-ci sur son bord extérieur latéral, qui établit simultanément l'assemblage sur le cadre d'étanchéité entourant latéralement l'ensemble membrane-électrodes,
l'étape (B) s'effectuant en utilisant un processus de compression et
avant la réalisation du processus de compression, la matière d'étanchéité du joint assemblant l'ensemble membrane-électrodes avec le cadre d'étanchéité étant placée dans une fente du cadre d'étanchéité ouvert en direction du bord extérieur de l'ensemble membrane-électrodes, de telle sorte qu'une partie de la matière d'étanchéité de consistance fluide pendant le processus de compression pénètre latéralement dans les deux électrodes à diffusion de gaz.

2. Procédé selon la revendication 1, **caractérisé en ce que** l'ensemble membrane-électrodes, la matière d'étanchéité et le cadre d'étanchéité sont aptes à être utilisés dans une pile à combustible NT-PEM ou HT-PEM.

3. Procédé selon la revendication 1 ou 2, **caractérisé en ce que** le processus de compression est un processus de thermocompression, lors duquel on fait chauffer la matière d'étanchéité à une température supérieure à sa température de fusion ou supérieure à sa plage de fusion.

4. Procédé selon l'une quelconque des revendications précédentes, **caractérisé en ce que** la matière d'étanchéité est thermoplastique et notamment est un fluoropolymère, notamment un THV.

5. Procédé selon l'une quelconque des revendications précédentes, **caractérisé en ce que** le cadre d'étanchéité est fabriqué à partir d'au moins deux couches d'une matière incompressible, faisant preuve d'un faible coefficient de dilatation thermique, notamment de matière plastique renforcée par tissu.

6. Procédé selon la revendication 5, **caractérisé en ce que** chaque couche du cadre d'étanchéité est composée d'au moins deux parties d'une matière plastique renforcée par tissu.

7. Procédé selon l'une quelconque des revendications précédentes, **caractérisé en ce que** l'ensemble membrane-électrodes est thermo-compressé avant la réalisation de l'étape (B) ou simultanément avec la réalisation de l'étape (B).

8. Procédé selon l'une quelconque des revendications précédentes, **caractérisé en ce que** l'ensemble membrane-électrodes est fabriqué d'après le procédé FlushCut (de coupe affleurante).

9. Procédé selon la revendication 4, **caractérisé en ce que** la matière d'étanchéité thermoplastique est fabriquée à partir d'au moins deux composants monomères, dont les proportions influencent la température de fusion ou la plage de fusion de la matière d'étanchéité thermoplastique.

10. Procédé selon la revendication 4, **caractérisé en ce que** l'ensemble membrane-électrodes est prévu pour être utilisé dans une pile à combustible, à une température de service théorique prédéfinie ou dans une plage de températures de service prédéfinie, la température de fusion ou la plage de fusion de la matière d'étanchéité thermoplastique étant choisie ou réglée de telle sorte que la température de fusion ou la plage de fusion de la matière d'étanchéité soit supérieure, toutefois préférentiellement pas de plus de 10° à 30°C à la température de service théorique ou à la plage de températures de service théorique.
